# EUROPÄISCHE PATENTSCHRIFT

(11) **EP 4 008 229 B1**
(45) Veröffentlichungstag und Bekanntmachung des Hinweises auf die Patenterteilung: **10.05.2023**
(21) Anmeldenummer: 21211375.7
(22) Anmeldetag: 30.11.2021
(51) Int. Cl.: A47L 9/28

(54) **SICH SELBSTTÄTIG FORTBEWEGENDES BODENBEARBEITUNGSGERÄT MIT EINER MEHRZAHL VON ABSTURZSENSOREN**
SELF-PROPELLED SOIL WORKING IMPLEMENT WITH A PLURALITY OF FALL SENSORS
APPAREIL DE TRAITEMENT DU SOL AUTONOME POURVU D'UNE PLURALITÉ DE CAPTEURS DE CHUTE

(30) Priorität: 03.12.2020 DE 102020132203
(43) Veröffentlichungstag der Anmeldung: 08.06.2022
(73) Patentinhaber: Vorwerk & Co. Interholding GmbH, 42275 Wuppertal (DE)
(72) Erfinder: Mosebach, Andrej, 59425 Unna (DE); Hayn, Henning, 40723 Hilden (DE)
(74) Vertreter: Müller, Enno

(56) Entgegenhaltungen:
- EP-A1- 3 417 755
- DE-A1-102018 201 615
- US-A1- 2008 276 407
- US-A1- 2019 246 857

## Beschreibung

### Gebiet Technik

Die Erfindung betrifft ein sich selbsttätig fortbewegendes Bodenbearbeitungsgerät mit einem Gerätegehäuse, einer Antriebseinrichtung zur Fortbewegung des Bodenbearbeitungsgerätes innerhalb einer Umgebung, einer Detektionseinrichtung zur Detektion von Umgebungsmerkmalen innerhalb der Umgebung und einer Recheneinrichtung, welche eingerichtet ist, basierend auf den von der Detektionseinrichtung detektierten Umgebungsmerkmalen Steuerbefehle an die Antriebseinrichtung zu übermitteln, wobei die Detektionseinrichtung mindestens einen an einer einem Untergrund zugewandten Unterseite des Gerätegehäuses angeordneten Absturzsensor aufweist, welcher eingerichtet ist, einen Abstand des Bodenbearbeitungsgerätes zu dem Untergrund zu detektieren, und wobei die Recheneinrichtung eingerichtet ist, die Antriebseinrichtung zur Änderung einer Fortbewegung des Bodenbearbeitungsgerätes zu steuern, wenn der von dem Absturzsensor detektierte Abstand größer ist als ein einen Abhang definierender Grenzwert.

### Stand der Technik

Sich selbsttätig fortbewegende Bodenbearbeitungsgeräte sind im Stand der Technik in unterschiedlichen Ausführungsformen bekannt.

Die Bodenbearbeitungsgeräte sind beispielsweise haushaltsübliche oder industriell genutzte Geräte, die eine Bodenbearbeitungstätigkeit wie beispielsweise Saugen, Wischen, Polieren, Schleifen, Ölen oder auch Kombinationen davon ausführen. Gemäß einer Ausführungsform kann das sich selbsttätig fortbewegende Bodenbearbeitungsgerät beispielsweise ein Saugroboter, Wischroboter oder ähnliches sein. Damit das Bodenbearbeitungsgerät nicht mit Hindernissen kollidiert, verfügt dieses über eine Detektionseinrichtung, die Hindernisse wie beispielsweise Wände, Möbel, Dekorationsgegenstände oder ähnliches in der Umgebung erkennen kann. Die Detektionseinrichtung kann beispielsweise eine Abstandsmesseinrichtung sein, die Abstände zu Hindernissen misst. Alternativ oder zusätzlich kann die Detektionseinrichtung auch Kontaktsensoren aufweisen, die einen Kontakt zu einem Hindernis detektieren können. Die Detektionseinrichtung kann eine Vielzahl von unterschiedlichen Sensoren aufweisen, die verschiedene Technologien zur Detektion der Umgebungsmerkmale nutzen. Übliche Detektionseinrichtungen weisen beispielsweise Laserabstandssensoren, insbesondere Triangulationssensoren, Ultraschallsensoren, Radarsensoren oder ähnliche auf.

Bei höher entwickelten Geräten ist es des Weiteren bekannt, dass die von der Detektionseinrichtung detektierten Umgebungsmerkmale zur Erstellung einer Umgebungskarte verwendet werden, die einen Grundriss der Umgebung des Bodenbearbeitungsgerätes zeigt und in welcher die Positionen von Hindernissen vermerkt sind. Anhand der erstellten Umgebungskarte kann die Recheneinrichtung eine aktuelle Position des Bodenbearbeitungsgerätes in der Umgebung bestimmen und gegebenenfalls eine Fortbewegungsroute durch die Umgebung planen. Es ist des Weiteren bekannt, dass die Detektionseinrichtung des Bodenbearbeitungsgerätes auch einen oder mehrere Absturzsensoren aufweist, der einen Abstand zu einem Untergrund misst und somit gegebenenfalls detektiert, dass sich das Bodenbearbeitungsgerät auf einen Abhang zubewegt. Ein solcher Abhang kann beispielsweise ein Treppenabgang, ein Randbereich einer Stufe, eines Podestes oder ähnliches sein. Wenn sich das Bodenbearbeitungsgerät auf einen solchen Abhang zubewegt, gelangt der Absturzsensor, welcher an der Unterseite des Gerätegehäuses angeordnet ist, über den Abhang und detektiert den veränderten, nämlich vergrößerten, Abstand zu dem Untergrund des Bodenbearbeitungsgerätes, nämlich beispielsweise der Oberseite einer nächsten Stufe. Die Recheneinrichtung des Bodenbearbeitungsgerätes erkennt daraufhin den Abhang und kann das Bodenbearbeitungsgerät zu einer Richtungsänderung veranlassen und somit den Absturz des Bodenbearbeitungsgerätes an dem Abhang verhindern. Das Bodenbearbeitungsgerät wendet somit an der Randkante des Abhangs bzw. fährt parallel zu dieser und setzt seine Fortbewegung fort. Üblicherweise weist das Bodenbearbeitungsgerät an mehreren Positionen seines Gerätegehäuses solche Absturzsensoren auf, um bei unterschiedlichen Fortbewegungsrichtungen einen Schutz vor Absturz des Bodenbearbeitungsgerätes zu bieten.

Obwohl sich die Absturzsensoren im Stand der Technik bewährt haben, besteht dennoch grundsätzlich die Gefahr, dass ein Absturzsensor defekt ist und die Annäherung des Bodenbearbeitungsgerätes an einen Abhang nicht mehr detektieren kann. In diesem Fall könnte es passieren, dass das Bodenbearbeitungsgerät einen Abhang herabfällt und dabei Beschädigungen hervorruft oder gar eine Gefahr für Personen darstellt.

Den Stand der Technik darstellende Bodenbearbeitungsgeräte werden in US 2008/276407 A1, DE 10 2018 201615 A1, EP 3 417 755 A1 und US 2019/246857 A1 offenbart.

### Zusammenfassung der Erfindung

Ausgehend von dem vorgenannten Stand der Technik ist es daher Aufgabe der Erfindung, die Betriebssicherheit des Bodenbearbeitungsgerätes weiter zu verbessern.

Zur Lösung dieser Aufgabe wird vorgeschlagen, dass das sich selbsttätig fortbewegende Bodenbearbeitungsgerät an der Unterseite des Gerätegehäuses eine Mehrzahl von in Richtung einer Umfangskontur der Unterseite hintereinander angeordneten äußeren Absturzsensoren und eine Mehrzahl von bezogen auf die Anordnung der äußeren Absturzsensoren nach innen versetzten inneren Absturzsensoren aufweist, wobei die Absturzsensoren so in einer Auswerteschaltung der Detektionseinrichtung verschaltet sind, dass die Detektionssignale der Gesamtheit von inneren Absturzsensoren unabhängig von den Detektionssignalen der Gesamtheit von äußeren Absturzsensoren auswertbar sind, wobei die Gesamtheit von inneren Absturzsensoren in eine gemeinsame erste Auswerteschaltung der Detektionseinrichtung eingebunden ist, und wobei die Gesamtheit von äußeren Absturzsensoren in eine gemeinsame, separat zu der ersten Auswerteschaltung ausgebildete zweite Auswerteschaltung eingebunden ist.

Erfindungsgemäß verfügt das Bodenbearbeitungsgerät somit über eine Mehrzahl von Absturzsensoren, die ausgehend von der Umfangskontur der Unterseite des Bodenbearbeitungsgerätes von außen zu einer Mitte der Unterseite des Gerätegehäuses betrachtet in zwei Reihen angeordnet sind. Die innen liegende zweite Reihe von Absturzsensoren bildet dabei eine Redundanz für den Fall, dass ein Absturzsensor der äußeren ersten Reihe von Absturzsensoren defekt ist und einen Abhang nicht detektieren kann. Die Absturzsensoren des Bodenbearbeitungsgerätes sind somit vorteilhaft in doppelter Ausführung in zwei in eine radiale Richtung der Umfangskontur betrachtet hintereinanderliegenden Reihen angeordnet. Dadurch wird verhindert, dass es bei Ausfall eines Absturzsensors der der Umfangskontur nächstliegenden ersten Sensorreihe zu einem Absturz des Bodenbearbeitungsgerätes an einem Abhang kommt. Es ist somit eine sogenannte "Ein-Fehlertoleranz" des Bodenbearbeitungsgerätes gegeben, welche fordert, dass der sichere Betrieb des Bodenbearbeitungsgerätes auch bei Auftritt eines Fehlers weiterhin sichergestellt ist.

Die Absturzsensoren sind so in einer Auswerteschaltung der Detektionseinrichtung verschaltet, dass die Detektionssignale der inneren Absturzsensoren unabhängig von den Detektionssignalen der äußeren Absturzsensoren auswertbar sind. Durch die unabhängige Auswertbarkeit kann eine Fehlfunktion der Absturzsensorik entweder einem Sensor der Gesamtheit von äußeren Absturzsensoren oder einem Sensor der Gesamtheit von inneren Absturzsensoren zugeordnet werden. Bevorzugt ist ein jeweiliges Detektionssignal dabei einem bestimmten Absturzsensor zuordenbar, so dass die Auswerteschaltung definiert angeben kann, ob die inneren oder äußeren Absturzsensoren betroffen sind, insbesondere auch eine Auskunft darüber, welcher der inneren oder äußeren Absturzsensoren defekt ist.

Des Weiteren sind die inneren Absturzsensoren in eine erste Auswerteschaltung der Detektionseinrichtung eingebunden, während die äußeren Absturzsensoren in eine separat zu der ersten Auswerteschaltung ausgebildete zweite Auswerteschaltung eingebunden sind. Gemäß dieser Ausgestaltung weist das Bodenbearbeitungsgerät somit zwei unabhängig voneinander auswertbare Messschleifen auf. Jede Auswerteschaltung beinhaltet eine eigene Messschleife bzw. einen eigenen Logikkreis, welcher nur jeweils entweder die inneren Absturzsensoren oder nur die äußeren Absturzsensoren einbindet. Bei einem Fehler in einem der Absturzsensoren kann somit klar bestimmt werden, ob ein innerer Absturzsensor oder ein äußerer Absturzsensor defekt ist, und bei einem Fehler in einer der Auswerteschaltungen kann durch einen Vergleich der Detektionssignale der Absturzsensoren innerhalb der Messschleifen und beider Messschleifen zueinander klar bestimmt werden, ob ein Fehler in einer der Auswertungsschaltungen vorliegt.

Es wird vorgeschlagen, dass die Anzahl der inneren Absturzsensoren der Anzahl der äußeren Absturzsensoren entspricht. Somit kann die Sicherungsfunktion eines äußeren Absturzsensors bei Versagen des betreffenden äußeren Absturzsensors durch einen inneren Absturzsensor wahrgenommen werden. Sofern ein äußerer Absturzsensor durch Defekt ausfällt, bewegt sich das Bodenbearbeitungsgerät zunächst weiter auf den Abhang zu bis die Kante des Abhangs in den Detektionsbereich eines inneren Absturzsensors gelangt. Sodann kann der Abhang erkannt und entsprechend reagiert werden.

Insbesondere wird vorgeschlagen, dass das Bodenbearbeitungsgerät mindestens drei äußere Absturzsensoren und mindestens drei innere Absturzsensoren aufweist. Besonders bevorzugt ist eine Ausbildung des Bodenbearbeitungsgerätes mit vier äußeren Absturzsensoren und vier inneren Absturzsensoren. Bei dieser Ausbildung kann ein im Wesentlichen beispielsweise viereckiges Bodenbearbeitungsgerät an jeder Seitenkante der Unterseite des Gerätegehäuses mit je einem äußeren Absturzsensor und je einem inneren Absturzsensor ausgestattet sein. Bei einem Bodenbearbeitungsgerät mit einer bezogen auf eine Draufsicht im Wesentlichen kreisförmigen Umfangskontur können die vier äußeren Absturzsensoren bzw. vier inneren Absturzsensoren vorzugsweise in Abständen von 90 Grad-Winkelbereichen angeordnet sein, so dass auch dadurch Schutz vor einem Absturz gegeben ist, wenn sich das Bodenbearbeitungsgerät in einer Vorwärts- oder Rückwärtsfahrt auf einen Abhang zubewegt oder parallel zu einer Randkante des Abhangs verfährt. Es können auch mehr als vier innere und vier äußere Absturzsensoren verwendet werden. Dadurch erhöht sich der Schutz vor einem Absturz auch an Abhängen, welche eine unregelmäßige Randkontur aufweisen, beispielsweise Umfangsteilbereiche haben, welche stegförmig zulaufen, insbesondere wenn deren Stegbreite geringer ist als ein Abstand zweier in Fortbewegungsrichtung nebeneinander angeordneter Räder des Bodenbearbeitungsgerätes.

Gemäß einer besonders bevorzugten Ausführung ist jeweils ein innerer Absturzsensor einem äußeren Absturzsensor bezogen auf eine Position an der Unterseite des Gerätegehäuses räumlich zugeordnet, so dass der innere Absturzsensor und der äußere Absturzsensor ein Sensorpaar bilden. Jeder äußere Absturzsensor hat somit einen Ersatzsensor, welcher im Falle eines Funktionsausfalls des äußeren Absturzsensors die Sicherungsfunktion des Bodenbearbeitungsgerätes übernimmt. Der innere Absturzsensor befindet sich dabei bevorzugt in unmittelbarer Nähe zu dem äußeren Absturzsensor, damit das Bodenbearbeitungsgerät bei Ausfall des äußeren Absturzsensors keine relevante Wegstrecke zurücklegt, bis der innere Absturzsensor den Abhang detektieren kann. Bezogen auf eine Umfangsrichtung entlang der Umfangskontur der Unterseite des Gerätegehäuses können der innere Absturzsensor und der äußere Absturzsensor desselben Sensorpaares direkt nebeneinander angeordnet sein. Alternativ ist es auch möglich, dass diese in Umfangsrichtung zueinander versetzt sind und somit beispielsweise der äußere Absturzsensor in Umfangsrichtung vor dem inneren Absturzsensor, jedoch seitlich versetzt dazu, d. h. in zweiter Reihe, angeordnet ist. Bezogen auf die radiale Richtung der Umfangskontur kann zwischen dem äußeren Absturzsensor und dem zugeordneten in zweiter Reihe angeordneten inneren Absturzsensor desselben Sensorpaares grundsätzlich ein gewisser Abstand liegen. Dieser Abstand kann beispielsweise wenige Millimeter bis hin zu wenigen Zentimetern betragen. Je weiter die Absturzsensoren desselben Sensorpaares bezogen auf die radiale Richtung beabstandet sind, umso später kann der innere Absturzsensor jedoch einen Abhang erkennen, wenn der äußere Absturzsensor zuvor ausgefallen ist. Je größer der radiale Abstand zwischen den Absturzsensoren desselben Sensorpaares ist, desto besser können die Detektionsbereiche des äußeren Absturzsensors und des inneren Absturzsensors andererseits voneinander unterschieden werden, so dass die Recheneinrichtung mit Sicherheit bestimmen kann, dass ein Absturzsensor defekt ist.

Insbesondere wird bei der paarweisen Anordnung eines inneren Absturzsensors und eines äußeren Absturzsensors vorgeschlagen, dass die Recheneinrichtung eingerichtet ist, die Fortbewegung des Bodenbearbeitungsgerätes zu stoppen, wenn der innere Absturzsensor eines Sensorpaares einen Abhang detektiert, obwohl der äußere Absturzsensor desselben Sensorpaares zuvor keinen Abhang detektiert hat. In einem fehlerfreien Zustand der Absturzsensoren detektiert bei Annäherung des Bodenbearbeitungsgerätes an einen Abhang zunächst der äußere Absturzsensor eine Abstandsänderung zu einem Untergrund, bevor dann der zugeordnete innere Absturzsensor bei weitergeführter Annäherung des Bodenbearbeitungsgerätes in Richtung des Abhangs die Abstandsänderung ebenfalls detektieren kann. Wenn der äußere Absturzsensor nun ausfällt, defekt ist oder einen falschen Detektionswert angibt, kann die Recheneinrichtung gegebenenfalls nicht auf die Anwesenheit eines Abhangs im Detektionsbereich des äußeren Absturzsensors schließen. In dem Fall veranlasst die Recheneinrichtung des Bodenbearbeitungsgerätes keine Richtungsänderung. Das Bodenbearbeitungsgerät setzt somit seine Fortbewegung fort und steuert auf den Abhang zu, bis der Abhang in den Detektionsbereich des inneren Absturzsensors gelangt. Wenn dieser nun einen Abhang detektieren kann, schließt die Recheneinrichtung darauf, dass der in Fortbewegungsrichtung vorgeordnete äußere Absturzsensor defekt ist. In diesem Fall greift die Sicherheitsmaßnahme des Bodenbearbeitungsgerätes und die Recheneinrichtung stoppt die Antriebseinrichtung des Bodenbearbeitungsgerätes, so dass es zu einem Stillstand kommt. Es erfolgt somit eine Sicherheitsabschaltung des Bodenbearbeitungsgerätes bzw. zumindest eine Sicherheitsabschaltung der Antriebseinrichtung, so dass ein Absturz des Bodenbearbeitungsgerätes an dem Abhang verhindert ist.

Es kann vorgesehen sein, dass die Recheneinrichtung eingerichtet ist, ein Fehlersignal an einen Nutzer des Bodenbearbeitungsgerätes zu übermitteln, wenn der innere Absturzsensor eines Sensorpaares einen Abhang detektiert, während der äußere Absturzsensor desselben Sensorpaares keinen Abhang detektiert. Alternativ oder zusätzlich kann die Recheneinrichtung somit anstatt oder zusätzlich zu dem Stoppen der Fortbewegung des Bodenbearbeitungsgerätes einen Fehlerfall an einen Nutzer des Bodenbearbeitungsgerätes senden. Gemäß einer Ausführung kann die Antriebseinrichtung des Bodenbearbeitungsgerätes sofort gestoppt werden und dann ein Fehlersignal an den Nutzer übermittelt werden. Alternativ ist es jedoch auch möglich, dass das Bodenbearbeitungsgerät zunächst weiter betrieben wird, unter der Maßgabe, dass der innere Absturzsensor nun die Sicherungsfunktion des zugeordneten defekten äußeren Absturzsensors übernimmt. Das Fehlersignal, d. h. die Information über den Fehler der Absturzsensorik, kann den Nutzer dann darüber informieren, dass dieser das Bodenbearbeitungsgerät von einem Fachbetrieb in Bezug auf die Funktionssicherheit kontrollieren lassen sollte. Das Fehlersignal kann dem Nutzer in Form einer akustischen oder optischen Information mitgeteilt werden. Beispielsweise kann das Bodenbearbeitungsgerät einen Lautsprecher oder ein Display aufweisen, welches den aufgetretenen Fehler in Sprach- oder Textform ausgibt. Des Weiteren ist es auch möglich, dass das Bodenbearbeitungsgerät eine Kommunikationsschnittstelle aufweist, die das Fehlersignal an ein in Kommunikationsverbindung mit dem Bodenbearbeitungsgerät stehendes externes Endgerät des Nutzers übermittelt. Beispielsweise kann das externe Endgerät ein Mobiltelefon, ein Tablet-Computer oder ein anderes mobiles oder stationäres Gerät des Nutzers sein, welches geeignet ist, das Fehlersignal zu empfangen und dieses dem Nutzer zur Kenntnis zu bringen. Insbesondere wird vorgeschlagen, dass das externe Endgerät des Nutzers eine Applikation aufweist, die für die Kommunikation mit dem Bodenbearbeitungsgerät, insbesondere dessen Rechenrichtung, optimiert ist. Über die Applikation kann der Nutzer beispielsweise auch Steuerbefehle an die Recheneinrichtung des Bodenbearbeitungsgerätes übermitteln.

Es wird vorgeschlagen, dass die inneren Absturzsensoren so an der Unterseite des Gerätegehäuses angeordnet sind, dass eine Verbindungsgerade zwischen zwei in Umfangsrichtung der Umfangskontur hintereinander angeordneten inneren Absturzsensoren einen an der Unterseite definierten Schwerpunktbereich, welcher eine vertikale Projektion des Massenschwerpunktes des Bodenbearbeitungsgerätes in die Ebene der Absturzsensoren aufweist, nicht schneidet, insbesondere auch nicht tangiert. Gemäß dieser Ausgestaltung sind die inneren Absturzsensoren, und damit auch die äußeren Absturzsensoren, so um eine vertikale Projektion des Massenschwerpunktes in die Sensorebene angeordnet, dass Verbindungsgeraden zwischen jeweils in Umfangsrichtung hintereinander liegenden Absturzsensoren den definierten Schwerpunktbereich nicht schneiden oder berühren. Der Schwerpunktbereich ist bezogen auf die vertikale Projektion des Massenschwerpunktes so definiert, dass ein Absturz des Bodenbearbeitungsgerätes an einem Abhang wahrscheinlich ist, wenn eine Randkante des Abhangs in den definierten Schwerpunktbereich eindringt, d. h. vertikal unter diesem liegt. Daher wird eine bevorstehende Absturzsituation rechtzeitig erkannt, wenn der Abhang detektiert wird, solange sich der Schwerpunktbereich noch nicht über der Randkante des Abhangs befindet. Bezogen auf eine Blickrichtung auf das Bodenbearbeitungsgerät, bei welcher der Betrachter vertikal von oben auf das auf dem Untergrund stehende Bodenbearbeitungsgerät blickt, liegt der Massenschwerpunkt des Bodenbearbeitungsgerätes bevorzugt zentral innerhalb des definierten Schwerpunktbereiches. Wenn die inneren Absturzsensoren so außerhalb des definierten Schwerpunktbereiches an dem Gerätegehäuse angeordnet sind, dass eine gedachte Verbindungsgerade zwischen aufeinanderfolgenden Absturzsensoren den Schwerpunktbereich nicht schneidet oder zusätzlich auch nicht tangiert, kann das Bodenbearbeitungsgerät nicht über einen Abhang mit einer ebenso geradlinigen Randkante stürzen. Vielmehr würde die Randkante des Abhangs zuvor in den Detektionsbereich eines inneren Absturzsensors (und auch äußeren Absturzsensors) gelangen, bevor der Massenschwerpunkt des Bodenbearbeitungsgerätes relativ zu dem Abhang so liegt, dass das Bodenbearbeitungsgerät das Gleichgewicht verliert. Der definierte Schwerpunktbereich kann somit auch als Absturzbereich bezeichnet werden, in dem die Anwesenheit eines Randbereiches eines Abhangs wahrscheinlich zu einem Kippen des Bodenbearbeitungsgerätes führen würde.

In diesem Zusammenhang wird insbesondere vorgeschlagen, dass der Schwerpunktbereich kreisförmig ausgebildet ist und der auf die Unterseite des Gerätegehäuses projizierte Massenschwerpunkt den Mittelpunkt des kreisförmigen Schwerpunktbereiches definiert. Gemäß dieser Ausgestaltung befindet sich die in der Sensorebene liegende Projektion des Massenschwerpunktes genau in der Mitte des kreisförmigen Schwerpunktbereiches und bildet somit den Kreismittelpunkt. Die inneren Absturzsensoren und gegebenenfalls auch äußeren Absturzsensoren können regelmäßig oder unregelmäßig um den kreisförmigen Schwerpunktbereich angeordnet sein, wobei auch dann die Bedingung erfüllt ist, dass eine Verbindungsgerade zwischen aufeinander folgenden Absturzsensoren keine Tangente, Sekante oder Passante der Kreisform ist.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät,
- Fig. 2: das Bodenbearbeitungsgerät in einer Seitenansicht vor einem Abhang,
- Fig. 3: eine Unteransicht des Bodenbearbeitungsgerätes,
- Fig. 4a: das Bodenbearbeitungsgerät in einer Unteransicht bei Annäherung an einen Abhang,
- Fig. 4b: das Bodenbearbeitungsgerät gemäß Figur 4a bei teilweisem Überschreiten des Abhangs,
- Fig. 4c: das Bodenbearbeitungsgerät gemäß den Figuren 4a und 4b bei fortgesetztem Überschreiten des Abhangs.

### Beschreibung der Ausführungsformen

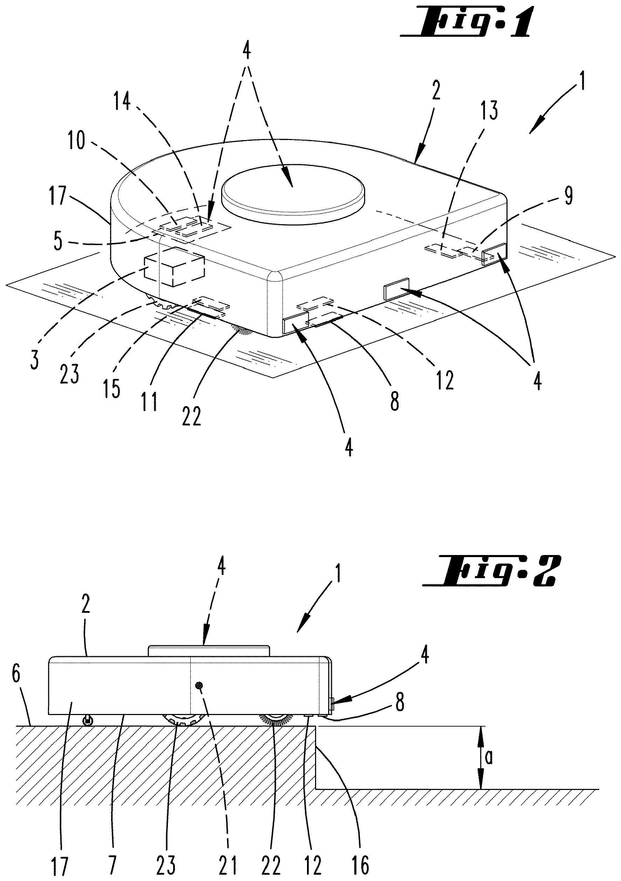

Figur 1 zeigt beispielhaft ein erfindungsgemäßes Bodenbearbeitungsgerät 1, welches hier als sich selbsttätig fortbewegender Reinigungsroboter ausgebildet ist. Das Bodenbearbeitungsgerät 1 verfügt über ein Gerätegehäuse 2 und eine Antriebseinrichtung 3, welche zum Antrieb von an einer Unterseite 7 des Gerätegehäuses 2 angeordneten Rädern 23 dient. Das Bodenbearbeitungsgerät 1 weist einen nicht dargestellten Akkumulator auf, welcher einer Energieversorgung für die Antriebseinrichtung 3 sowie weiterer elektrischer Verbraucher des Bodenbearbeitungsgerätes 1 dient. Die Antriebseinrichtung 3 weist hier beispielsweise einen nicht näher dargestellten Elektromotor auf. An dem Gerätegehäuse 2 ist des Weiteren ein Reinigungselement 22 beweglich gelagert, welches hier als rotierende Borstenwalze ausgebildet ist. Des Weiteren kann das Bodenbearbeitungsgerät 1 ein Gebläse aufweisen (nicht dargestellt), um beispielsweise Sauggut in einen Sauggutsammelbehälter überführen zu können. Alternativ zu der Ausbildung als Saugreinigungsgerät kann das Bodenbearbeitungsgerät 1 jedoch auch als beliebiges anderes sich selbsttätig fortbewegendes Bodenbearbeitungsgerät 1 ausgebildet sein, beispielsweise als Wischgerät, Poliergerät oder ähnliches.

Damit sich das Bodenbearbeitungsgerät 1 ohne Kollision mit Hindernissen auf einem Untergrund 6 fortbewegen kann, verfügt das Bodenbearbeitungsgerät 1 über eine Detektionseinrichtung 4 sowie eine Recheneinrichtung 5, welche dazu ausgebildet ist, die von der Detektionseinrichtung 4 detektieren Signale auszuwerten. Die Detektionseinrichtung 4 weist hier mehrere Untereinrichtungen auf, die der Detektion von Umgebungsmerkmalen dienen. Zum einen gehört zu der Detektionseinrichtung 4 eine Abstandsmesseinrichtung, die Abstände zu in der Umgebung vorhandenen Hindernissen misst. Die Abstandsmesseinrichtung ist hier beispielsweise als Laserabstandsmesseinrichtung, insbesondere Triangulationseinrichtung mit einer oberseitig auf dem Gerätegehäuse 2 angeordneten 360°-Lichtaustrittsöffnung, ausgebildet. Die von der Abstandsmesseinrichtung detektierten Abstandswerte werden von der Recheneinrichtung 5 verwendet, um eine Umgebungskarte zu erstellen, welche neben einem Grundriss der Umgebung, beispielsweise einem Raum oder einer Wohnung, zusätzlich auch Positionen und Ausmaße von in dem Raum bzw. der Wohnung vorhandenen Hindernissen enthält. Die erstellte Umgebungskarte dient der Recheneinrichtung 5 des Bodenbearbeitungsgerätes 1 zur Navigation und Selbstlokalisierung innerhalb der Umgebung. Insbesondere kann eine aktuelle Position und Orientierung des Bodenbearbeitungsgerätes 1 ermittelt werden und beispielsweise eine Verfahrroute durch die Umgebung geplant werden, welche frei von Hindernissen ist. Des Weiteren weist das Bodenbearbeitungsgerät 1 als Teil der Detektionseinrichtung 4 frontal an dem Gerätegehäuse 2 angeordnete Infrarotsensoren auf. Die Infrarotsensoren dienen der Detektion von Hindernissen im Nahbereich und somit auch einer Vermeidung von Kollisionen. Des Weiteren gehören zu der Detektionseinrichtung 4 Absturzsensoren 8, 9, 10, 11, 12, 13, 14, 15, welche einen Abhang 16 auf dem Untergrund 6 detektieren können. Hierzu detektieren die Absturzsensoren 8, 9, 10, 11, 12, 13, 14, 15 einen Abstand a, welcher eine Höhenänderung des Untergrunds 6 angibt. Die Recheneinrichtung 5 wertet den detektierten Abstand a durch einen Vergleich mit einem definierten Grenzwert aus. Sofern der detektierte Abstand a größer ist als der definierte Grenzwert, wird darauf geschlossen, dass sich das Bodenbearbeitungsgerät 1 an einem Abhang 16 des Untergrundes 6 befindet. Um das Bodenbearbeitungsgerät 1 aus allen Richtungen und damit auch in alle beliebigen Fortbewegungsrichtungen vor einem Absturz über den Abhang 16 zu schützen, sind die Absturzsensoren 8, 9, 10, 11, 12, 13, 14, 15 entlang einer Umfangskontur 17 der Unterseite 7 des Gerätegehäuses 2 angeordnet.

Figur 2 zeigt eine Seitenansicht eines vor einem Abhang 16 stehenden Bodenbearbeitungsgerätes 1. Der Abhang 16 weist eine Höhe, d. h. einen Abstand a zwischen zwei verschiedenen Ebenen des Untergrundes 6 auf, welche bei einem Absturz des Bodenbearbeitungsgerätes 1 voraussichtlich zu einer Beschädigung des Untergrundes 6 und/oder des Bodenbearbeitungsgerätes 1 führen könnte. Derartige Abhänge 16 können beispielsweise Treppenstufen sein. Die Recheneinrichtung 5 unterscheidet Abhänge 16 anhand des definierten Grenzwertes, so dass geringfügige Höhenänderungen an beispielsweise Teppichkanten, Türschwellen und dergleichen nicht als gefährlich eingestuft werden. An dem hier beispielsweise dargestellten Abhang 16 besteht jedoch die Gefahr, dass das Bodenbearbeitungsgerät 1 bei fortgeführter Fortbewegung in Richtung des Abhangs 16 durch eine Verlagerung des Massenschwerpunktes 21 des Bodenbearbeitungsgerätes 1 kippt und den Abhang 16 herabstürzt.

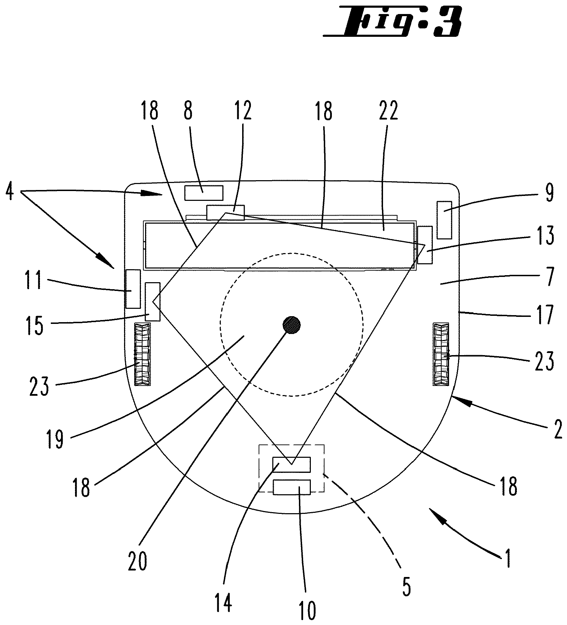

Figur 3 zeigt die Unterseite 7 des Bodenbearbeitungsgerätes 1 mit den entlang der Umfangskontur 17 des Gerätegehäuses 2 angeordneten Absturzsensoren 8, 9, 10, 11, 12, 13, 14, 15. Die Absturzsensoren 8, 9, 10, 11, 12, 13, 14, 15 sind in zwei Reihen angeordnet, nämlich in einer äußeren Reihe, welche vier äußere Absturzsensoren 8, 9, 10, 11 aufweist, und einer inneren Reihe, welche vier innere Absturzsensoren 12, 13, 14, 15 beinhaltet. Jedem äußeren Absturzsensor 8, 9, 10, 11 ist dabei jeweils ein innerer Absturzsensor 12, 13, 14, 15 zugeordnet, so dass sich Sensorpaare bilden. Hier sind Sensorpaare gebildet aus dem äußeren Absturzsensor 8 und dem inneren Absturzsensor 12, dem äußeren Absturzsensor 9 und dem inneren Absturzsensor 13, dem äußeren Absturzsensor 10 und dem inneren Absturzsensor 14 sowie dem äußeren Absturzsensor 11 und dem inneren Absturzsensor 15. Jedes Paar von Absturzsensoren 8, 9, 10, 11, 12, 13, 14, 15 ist dabei im Wesentlichen einer Seite der Umfangskontur 17 zugeordnet, um das Bodenbearbeitungsgerät 1 in vier verschiedene Richtungen gegen in der Umgebung vorhandene Abhänge 16 abzusichern. Die Figur 3 stellt des Weiteren einen definierten Schwerpunktbereich 19 dar, welcher einen kreisförmigen Bereich um eine Projektion 20 des Massenschwerpunktes 21 in die an der Unterseite 7 ausgebildete Ebene der Absturzsensoren 8, 9, 10, 11, 12, 13, 14, 15 definiert. Bei einer Betrachtung des Bodenbearbeitungsgerätes 1 von unten oder oben (bei waagerechter Orientierung des Gerätegehäuses 2 und vertikaler Ansicht auf das Gerätegehäuse 2) liegen der Massenschwerpunkt 21 und dessen Projektion 20 aufeinander. Der um die Projektion 20 definierte Schwerpunktbereich 19 ist so bemessen, dass Verbindungsgeraden 18 zwischen entlang der Umfangskontur 17 aufeinander folgenden inneren Absturzsensoren 12, 13, 14, 15 den kreisförmigen Schwerpunktbereich 19 nicht berühren. Hier sind Verbindungsgeraden 18 definiert zwischen den aufeinanderfolgenden inneren Absturzsensoren 12 und 13, 13 und 14, 14 und 15 sowie 15 und 12. Erkennbar schneiden oder berühren diese Verbindungsgeraden 18 den Schwerpunktbereich 19 nicht. Der Schwerpunktbereich 19 ist so bemessen, dass für das Bodenbearbeitungsgerät 1 keine Absturzgefahr an einem Abhang 16 besteht, solange eine Randkante des Abhangs 16 noch nicht in diesen Schwerpunktbereich 19 eingreift, d. h. bei horizontaler Orientierung des Bodenbearbeitungsgerätes 1 noch nicht unterhalb des Schwerpunktbereiches 19 liegt. Sofern das Bodenbearbeitungsgerät 1 jedoch weiter in Richtung des Abhangs 16 verfährt und der Schwerpunktbereich 19 bereits teilweise über dem Abhang 16 liegt, besteht ein großes Risiko, dass das Bodenbearbeitungsgerät 1 über den Abhang 16 kippt. Die Anordnung der Absturzsensoren 8, 9, 10, 11, 12, 13, 14, 15 an der Unterseite 7 verhindert, dass sich das Bodenbearbeitungsgerät 1 überhaupt soweit in Richtung des Abhangs 16 fortbewegt und somit eine gefährliche Situation entsteht.

Die Nachbarschaft des Schwerpunktbereiches 19 an der Unterseite 7 des Gerätegehäuses 2 wird durch die Absturzsensoren 8, 9, 10, 11, 12, 13, 14, 15 überwacht, welche die Verbindungsgeraden 18 um den Schwerpunktbereich 19 aufspannen. Dabei dient die zweite Sensorreihe, welche die inneren Absturzsensoren, 12, 13, 14, 15 beinhaltet, als Ausfallsicherung für die äußeren Absturzsensoren 8, 9, 10, 11. Beispielsweise sichert der innere Absturzsensor 12 das Bodenbearbeitungsgerät 1 vor einem Absturz an einem Abhang 16 bei einer üblichen Vorwärtsbewegung des Bodenbearbeitungsgerätes 1, wenn der zugeordnete äußere Absturzsensor 8 ausfällt oder ein falsches Detektionsergebnis produziert. Ebenso kann der innere Absturzsensor 13 den äußeren Absturzsensor 9 ersetzen. Der innere Absturzsensor 14 bildet entsprechend eine Redundanz für den äußeren Absturzsensor 10, ebenso kann der innere Absturzsensor 15 den äußeren Absturzsensor 11 ersetzen.

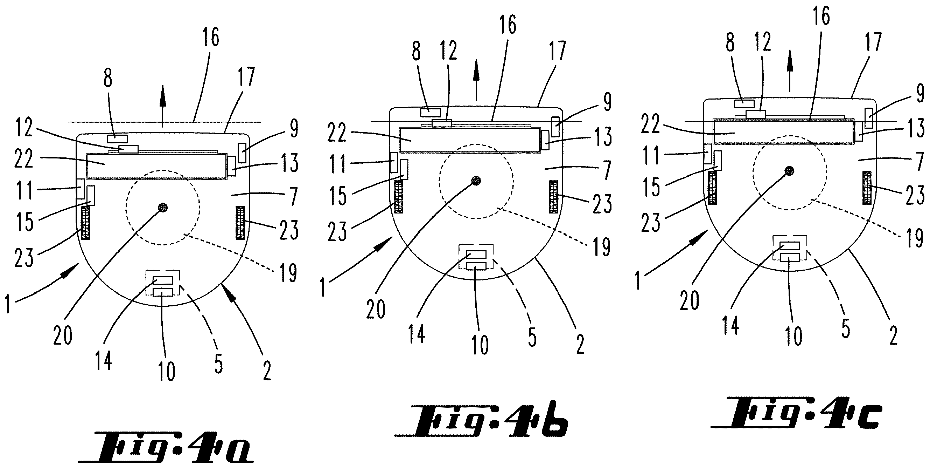

Im Folgenden wird die Funktionsweise der Absturzsensoren 8, 9, 10, 11, 12, 13, 14, 15 bei einer Vorwärtsbewegung des Bodenbearbeitungsgerätes 1 in Richtung eines Abhangs 16 anhand der Figuren 4a, 4b und 4c beschrieben. Gemäß der Figur 4a befindet sich das Gerätegehäuse 2 des Bodenbearbeitungsgerätes 1 noch vollständig vor dem Abhang 16. Gemäß Figur 4b ist das Gerätegehäuse 2 bereits teilweise über den Abhang 16 geschoben, nämlich so, dass ein Teilabschnitt der Umfangskontur 17 über den Abhang 16 hinausragt. In Figur 4c ist das Gerätegehäuse 2 noch weiter über den Abhang 16 geschoben.

In der Situation gemäß Figur 4a detektiert noch keiner der Absturzsensoren 8, 9, 10, 11, 12, 13, 14, 15 den Abhang 16. Das Bodenbearbeitungsgerät 1 bewegt sich daher zunächst weiter auf den Abhang 16 zu, nämlich in die durch einen Pfeil angedeutete Fortbewegungsrichtung. Sobald das Bodenbearbeitungsgerät 1 zumindest teilweise mit der Umfangskontur 17 über dem Abhang 16 steht, gerät die Randkante des Abhangs 16 in den Detektionsbereich des in Fortbewegungsrichtung vorauseilenden äußeren Absturzsensors 8 (Figur 4b). Sofern der Absturzsensor 8 fehlerfrei funktioniert, kann die Recheneinrichtung 5 die Anwesenheit des Abhangs 16 ermitteln und die Antriebseinrichtung 3 des Bodenbearbeitungsgerätes 1 so steuern, dass die Fortbewegungsrichtung geändert wird, nämlich von dem Abhang 16 weg. In dem hier gezeigten Beispiel wird jedoch davon ausgegangen, dass der in Fahrtrichtung der Umfangskontur 17 des Gerätegehäuses 2 am nächsten liegende äußere Absturzsensor 8 defekt ist und die Recheneinrichtung 5 somit nicht erkennen kann, dass sich das Gerätegehäuse 2 bereits teilweise über den Abhang 16 geschoben hat. Da sich der dem äußeren Absturzsensor 8 zugeordnete innere Absturzsensor 12 noch nicht über dem Abhang 16 befindet, kann dieser den Abhang 16 noch nicht erkennen. Die Bewegung des Bodenbearbeitungsgerätes 1 über den Abhang 16 wird somit fortgesetzt, bis die in Figur 4c gezeigte Stellung erreicht ist. Bei dieser Stellung befindet sich die Randkante des Abhangs 16 innerhalb des Detektionsbereiches des inneren Absturzsensors 12, welcher als Ersatz für den äußeren Absturzsensor 8 dient. Die Recheneinrichtung 5 erkennt, dass sich das Gerätegehäuse 2 bereits teilweise über dem Abhang 16 befindet und stoppt die Antriebseinrichtung 3 des Bodenbearbeitungsgerätes 1, noch weit bevor der Schwerpunktbereich 19 des Gerätegehäuses 2 über dem Abhang 16 liegt. Das Bodenbearbeitungsgerät 1 ist somit zuverlässig vor einem Absturz über den Abhang 16 gesichert. Neben dem Stoppen der Antriebseinrichtung 3 veranlasst die Recheneinrichtung 5 des Weiteren vorzugsweise auch die Ausgabe einer Information an einen Nutzer des Bodenbearbeitungsgerätes 1, so dass dieser darüber informiert wird, dass ein Fehlerfall aufgetreten ist und das Bodenbearbeitungsgerät 1 kontrolliert werden sollte.

**Liste der Bezugszeichen**

| | | | |
|---|---|---|---|
| 1 | Bodenbearbeitungsgerät | a | Abstand |
| 2 | Gerätegehäuse | | |
| 3 | Antriebseinrichtung | | |
| 4 | Detektionseinrichtung | | |
| 5 | Recheneinrichtung | | |
| 6 | Untergrund | | |
| 7 | Unterseite | | |
| 8 | Absturzsensor | | |
| 9 | Absturzsensor | | |
| 10 | Absturzsensor | | |
| 11 | Absturzsensor | | |
| 12 | Absturzsensor | | |
| 13 | Absturzsensor | | |
| 14 | Absturzsensor | | |
| 15 | Absturzsensor | | |
| 16 | Abhang | | |
| 17 | Umfangskontur | | |
| 18 | Verbindungsgerade | | |
| 19 | Schwerpunktbereich | | |
| 20 | Projektion | | |
| 21 | Massenschwerpunkt | | |
| 22 | Reinigungselement | | |
| 23 | Rad | | |

## Patentansprüche

1. Sich selbsttätig fortbewegendes Bodenbearbeitungsgerät (1) mit einem Gerätegehäuse (2), einer Antriebseinrichtung (3) zur Fortbewegung des Bodenbearbeitungsgerätes (1) innerhalb einer Umgebung, einer Detektionseinrichtung (4) zur Detektion von Umgebungsmerkmalen innerhalb der Umgebung und einer Recheneinrichtung (5), welche eingerichtet ist, basierend auf den von der Detektionseinrichtung (4) detektierten Umgebungsmerkmalen Steuerbefehle an die Antriebseinrichtung (3) zu übermitteln, wobei die Detektionseinrichtung (4) mindestens einen an einer einem Untergrund (6) zugewandten Unterseite (7) des Gerätegehäuses (2) angeordneten Absturzsensor (8, 9, 10, 11, 12, 13, 14, 15) aufweist, welcher eingerichtet ist, einen Abstand (a) des Bodenbearbeitungsgerätes (1) zu dem Untergrund (6) zu detektieren, und wobei die Recheneinrichtung (5) eingerichtet ist, die Antriebseinrichtung (3) zur Änderung einer Fortbewegung des Bodenbearbeitungsgerätes (1) zu steuern, wenn der von dem Absturzsensor (8, 9, 10, 11, 12, 13, 14, 15) detektierte Abstand (a) größer ist als ein einen Abhang (16) definierender Grenzwert, wobei das Bodenbearbeitungsgerät (1) an der Unterseite (7) des Gerätegehäuses (2) eine Mehrzahl von in Richtung einer Umfangskontur (17) der Unterseite (7) hintereinander angeordneten äußeren Absturzsensoren (8, 9, 10, 11) und eine Mehrzahl von bezogen auf die Anordnung der äußeren Absturzsensoren (8, 9, 10, 11) nach innen versetzten inneren Absturzsensoren (12, 13, 14, 15) aufweist, wobei die Absturzsensoren (8, 9, 10, 11, 12,13,14,15) so in einer Auswerteschaltung der Detektionseinrichtung (4) verschaltet sind, dass die Detektionssignale der Gesamtheit von inneren Absturzsensoren (12, 13, 14, 15) unabhängig von den Detektionssignalen der Gesamtheit von äußeren Absturzsensoren (8, 9, 10, 11) auswertbar sind, wobei die Gesamtheit von inneren Absturzsensoren (12, 13, 14, 15) in eine gemeinsame erste Auswerteschaltung der Detektionseinrichtung (4) eingebunden ist, und wobei die Gesamtheit von äußeren Absturzsensoren (8, 9, 10, 11) in eine gemeinsame, separat zu der ersten Auswerteschaltung ausgebildete zweite Auswerteschaltung eingebunden ist.

2. Bodenbearbeitungsgerät (1) nach Anspruch 1, **dadurch gekennzeichnet, dass** die Anzahl der inneren Absturzsensoren (12, 13, 14, 15) der Anzahl der äußeren Absturzsensoren (8, 9, 10, 11) entspricht.

3. Bodenbearbeitungsgerät (1) nach Anspruch 1 oder 2, **gekennzeichnet durch** mindestens drei äußere Absturzsensoren (8, 9, 10, 11) und mindestens drei innere Absturzsensoren (12,13,14,15).

4. Bodenbearbeitungsgerät (1) nach einem der vorhergehenden Ansprüche, **dadurch gekennzeichnet, dass** jeweils ein innerer Absturzsensor (12, 13, 14, 15) einem äußeren Absturzsensor (8, 9, 10, 11) bezogen auf eine Position an der Unterseite (7) des Gerätegehäuses (2) räumlich zugeordnet ist, so dass der innere Absturzsensor (12, 13, 14, 15) und der äußere Absturzsensor (8, 9, 10, 11) ein Sensorpaar bilden.

5. Bodenbearbeitungsgerät (1) nach Anspruch 4, **dadurch gekennzeichnet, dass** die Recheneinrichtung (5) eingerichtet ist, die Fortbewegung des Bodenbearbeitungsgerätes (1) zu stoppen, wenn der innere Absturzsensor (12, 13, 14, 15) eines Sensorpaares einen Abhang (16) detektiert, obwohl der äußere Absturzsensor (8, 9, 10, 11) desselben Sensorpaares zuvor keinen Abhang (16) detektiert hat.

6. Bodenbearbeitungsgerät (1) nach Anspruch 4 oder 5, **dadurch gekennzeichnet, dass** die Recheneinrichtung (5) eingerichtet ist, ein Fehlersignal an einen Nutzer des Bodenbearbeitungsgerätes (1) zu übermitteln, wenn der innere Absturzsensor (12, 13, 14, 15) eines Sensorpaares einen Abhang (16) detektiert, während der äußere Absturzsensor (8, 9, 10, 11) desselben Sensorpaares keinen Abhang (16) detektiert.

7. Bodenbearbeitungsgerät (1) nach einem der vorhergehenden Ansprüche, **dadurch gekennzeichnet, dass** die inneren Absturzsensoren (12, 13, 14, 15) so an der Unterseite (7) des Gerätegehäuses (2) angeordnet sind, dass eine Verbindungsgerade (18) zwischen zwei in Umfangsrichtung der Umfangskontur (17) hintereinander angeordneten inneren Absturzsensoren (12, 13, 14, 15) einen an der Unterseite (7) definierten Schwerpunktbereich (19), welcher eine vertikale Projektion (20) des Massenschwerpunktes (21) des Bodenbearbeitungsgerätes (1) in die Ebene der Absturzsensoren (8, 9, 10, 11, 12, 13, 14, 15) aufweist, nicht schneidet, insbesondere auch nicht tangiert.

8. Bodenbearbeitungsgerät (1) nach Anspruch 7, **dadurch gekennzeichnet, dass** der Schwerpunktbereich (19) kreisförmig ausgebildet ist und der auf die Unterseite (7) des Gerätegehäuses (2) projizierte Massenschwerpunkt (21) den Mittelpunkt des kreisförmigen Schwerpunktbereiches (19) definiert.

## Claims

1. A self-propelling soil cultivating implement (1) with an implement housing (2), a drive device (3) for propelling the soil cultivating implement (1) within an environment, a detection device (4) for detecting environmental features within the environment and a computing device (5) which is set up to transmit control commands to the drive device (3) based on the environmental features detected by the detection device (4), wherein the detection device (4) has at least one fall sensor (8, 9, 10, 11, 12, 13, 14, 15) arranged on an underside (7) of the implement housing (2) facing an underground (6), which fall sensor (8, 9, 10, 11, 12, 13, 14, 15) is set up to detect a distance (a) of the soil cultivating implement (1) from the underground (6), and wherein the computing device (5) is arranged to control the drive device (3) to change a movement of the soil cultivating implement (1) when the distance (a) detected by the fall sensor (8, 9, 10, 11, 12, 13, 14, 15) is greater than a limit value defining a slope (16), wherein the ground processing device (1) has on the underside (7) of the device housing (2) a plurality of outer fall sensors (8, 9, 10, 11, 12, 13, 14, 15) arranged one behind the other in the direction of a circumferential contour (17) of the underside (7) and a plurality of outer fall sensors (8, 9, 10, 12, 13, 14, 15) arranged one behind the other in the direction of a circumferential contour (17) of the underside (7), 11) and a plurality of inner crash sensors (12, 13, 14, 15) offset inwards with respect to the arrangement of the outer crash sensors (8, 9, 10, 11), the crash sensors (8, 9, 10, 11, 12, 13, 14, 15) being connected in an evaluation circuit of the detection device (4) in such a manner that the detection signals of the totality of inner crash sensors (12, 13, 14, 15) can be evaluated independently of the detection signals of the totality of outer crash sensors (8, 9, 10, 11), wherein the totality of inner crash sensors (12, 13, 14, 15) are connected in a common first evaluation circuit of the detection device (4, 15), and wherein the totality of external crash sensors (8, 9, 10, 11) are connected into a common second evaluation circuit formed separately from the first evaluation circuit.

2. A soil cultivating implement (1) according to claim 1, **characterized in that** the number of inner fall sensors (12, 13, 14, 15) corresponds to the number of outer fall sensors (8, 9, 10, 11).

3. A soil cultivating implement (1) according to claim 1 or 2, **characterized by** at least three outer fall sensors (8, 9, 10, 11) and at least three inner fall sensors (12, 13, 14, 15).

4. A soil cultivating implement (1) according to one of the preceding claims, **characterized in that** an inner fall sensor (12, 13, 14, 15) is spatially associated with an outer fall sensor (8, 9, 10, 11) in relation to a position on the underside (7) of the implement housing (2), so that the inner fall sensor (12, 13, 14, 15) and the outer fall sensor (8, 9, 10, 11) form a sensor pair.

5. A soil cultivating implement (1) according to claim 4, **characterized in that** the computing device (5) is arranged to stop the advancement of the soil cultivating implement (1) if the inner fall sensor (12, 13, 14, 15) of a sensor pair detects a slope (16) although the outer fall sensor (8, 9, 10, 11) of the same sensor pair has not previously detected a slope (16).

6. A soil cultivating implement (1) according to claim 4 or 5, **characterized in that** the computing device (5) is arranged to transmit an error signal to a user of the soil cultivating implement (1) if the inner fall sensor (12, 13, 14, 15) of a sensor pair detects a slope (16) while the outer fall sensor (8, 9, 10, 11) of the same sensor pair does not detect a slope (16).

7. A soil cultivating implement (1) according to one of the preceding claims, **characterized in that** the inner crash sensors (12, 13, 14, 15) are arranged on the underside (7) of the implement housing (2) in such a way that a connecting straight line (18) between two inner crash sensors (12, 13, 14, 15) arranged one behind the other in the circumferential direction of the circumferential contour (17) does not intersect, and in particular does not tangent to, a center of gravity region (19) defined on the underside (7), which region has a vertical projection (20) of the center of gravity (21) of the soil cultivating implement (1) into the plane of the fall sensors (8, 9, 10, 11, 12, 13, 14, 15).

8. A soil cultivating implement (1) according to claim 7, **characterized in that** the center of gravity region (19) is circular and the center of gravity (21) projected onto the underside (7) of the implement housing (2) defines the center of the circular center of gravity region (19).

## Revendications

1. Outil de travail du sol (1) se déplaçant automatiquement avec un boîtier d'appareil (2), un dispositif d'entraînement (3) pour le déplacement de l'appareil de travail du sol (1) à l'intérieur d'un environnement, un dispositif de détection (4) pour la détection de caractéristiques de l'environnement à l'intérieur de l'environnement et un dispositif de calcul (5), qui est conçu pour transmettre des instructions de commande au dispositif d'entraînement (3) sur la base des caractéristiques de l'environnement détectées par le dispositif de détection (4), le dispositif de détection (4) présentant au moins un capteur de chute (8, 9, 10, 11, 12, 13, 14, 15) disposé sur une face inférieure (7) du boîtier de l'appareil (2) tournée vers un sol (6), lequel est conçu pour détecter une distance (a) entre l'appareil de travail du sol (1) et le sol (6), et le dispositif de calcul (5) étant conçu pour commander le dispositif d'entraînement (3) afin de modifier l'avancement de l'appareil de travail du sol (1) lorsque la distance (a) détectée par le capteur de chute (8, 9, 10, 11, 12, 13, 14, 15) est supérieure à une valeur limite définissant une pente (16), l'appareil de traitement du sol (1) comportant, sur la face inférieure (7) du boîtier de l'appareil (2) de l'appareil, une pluralité de capteurs de chute extérieurs (8, 9, 10, 11, 12, 13, 14, 15, 16, 17) disposés les uns derrière les autres dans la direction d'un contour périphérique (17) de la face inférieure (7, 11) et une pluralité de capteurs de chute intérieurs (12, 13, 14, 15) décalés vers l'intérieur par rapport à la disposition des capteurs de chute extérieurs (8, 9, 10, 11), les capteurs de chute (8, 9, 10, 11, 12, 13, 14, 15) étant connectés de telle sorte dans un circuit d'évaluation du dispositif de détection (4), que les signaux de détection de l'ensemble des capteurs de chute intérieurs (12, 13, 14, 15) peuvent être évalués indépendamment des signaux de détection de l'ensemble des capteurs de chute extérieurs (8, 9, 10, 11), dans un premier circuit d'évaluation commun du dispositif de détection (4), et l'ensemble des capteurs de chute extérieurs (8, 9, 10, 11) étant intégré dans un deuxième circuit d'évaluation commun, réalisé séparément du premier circuit d'évaluation.

2. Outil de travail du sol (1) selon la revendication 1, **caractérisé en ce que** le nombre de capteurs de chute intérieurs (12, 13, 14, 15) correspond au nombre de capteurs de chute extérieurs (8, 9, 10, 11).

3. Outil de travail du sol (1) selon la revendication 1 ou 2, **caractérisé par** au moins trois capteurs de chute extérieurs (8, 9, 10, 11) et au moins trois capteurs de chute intérieurs (12, 13, 14, 15).

4. Outil de travail du sol (1) selon l'une des revendications précédentes, **caractérisé en ce qu'**un capteur de chute intérieur (12, 13, 14, 15) est associé dans l'espace à un capteur de chute extérieur (8, 9, 10, 11) par rapport à une position sur la face inférieure (7) du boîter d'appareil (2) de l'outil, de sorte que le capteur de chute intérieur (12, 13, 14, 15) et le capteur de chute extérieur (8, 9, 10, 11) forment une paire de capteurs.

5. Outil de travail du sol (1) selon la revendication 4, **caractérisé en ce que** le dispositif de calcul (5) est conçu pour arrêter le déplacement de l'appareil de travail du sol (1) lorsque le capteur de chute intérieur (12, 13, 14, 15) d'une paire de capteurs détecte une pente (16) alors que le capteur de chute extérieur (8, 9, 10, 11) de la même paire de capteurs n'a pas détecté de pente (16) auparavant.

6. Outil de travail du sol (1) selon la revendication 4 ou 5, **caractérisé en ce que** le dispositif de calcul (5) est conçu pour transmettre un signal d'erreur à un utilisateur de l'outil de travail du sol (1) lorsque le capteur de chute intérieur (12, 13, 14, 15) d'une paire de capteurs détecte une pente (16) alors que le capteur de chute extérieur (8, 9, 10, 11) de la même paire de capteurs ne détecte pas de pente (16).

7. Outil de travail du sol (1) selon l'une des revendications précédentes, **caractérisé en ce que** les capteurs de chute intérieurs (12, 13, 14, 15) sont disposés sur la face inférieure (7) du boîter d'appareil (2) de telle sorte qu'une droite de liaison (18) entre deux capteurs de chute intérieurs (12, 13, 14, 15) disposés l'un derrière l'autre dans la direction périphérique du contour périphérique (17) ne coupe pas, en particulier ne touche pas, une zone de centre de gravité (19) définie sur la face inférieure (7), qui présente une projection verticale (20) du centre de gravité (21) de l'outil de travail du sol (1) dans le plan des capteurs de chute (8, 9, 10, 11, 12, 13, 14,15).

8. Outil de travail du sol (1) selon la revendication 7, **caractérisé en ce que** la zone de centre de gravité (19) est de forme circulaire et le centre de gravité de masse (21) projeté sur la face inférieure (7) du boîter d'appareil (2) définit le centre de la zone de centre de gravité circulaire (19).
